# EUROPÄISCHE PATENTSCHRIFT

(11) **EP 3 215 742 B1**
(45) Veröffentlichungstag und Bekanntmachung des Hinweises auf die Patenterteilung: **02.01.2019**
(21) Anmeldenummer: 15790142.2
(22) Anmeldetag: 05.11.2015
(51) Int. Cl.: F04B 51/00

(54) **VERFAHREN UND VORRICHTUNG ZUM BETREIBEN EINER PUMPE**
METHOD AND DEVICE FOR OPERATING A PUMP
PROCÉDÉ ET DISPOSITIF DE FONCTIONNEMENT D'UNE POMPE

(30) Priorität: 05.11.2014 AT 508072014
(43) Veröffentlichungstag der Anmeldung: 13.09.2017
(73) Patentinhaber: AVL List GmbH, 8020 Graz (AT)
(72) Erfinder: BURAZER, Vedran, A-8045 Graz (AT); BUCHNER, Michael, A-8010 Graz (AT); LICHTENEGGER, Georg, A-8020 Graz (AT)
(74) Vertreter: Patentanwälte Pinter & Weiss OG
(86) Internationale Anmeldenummer: PCT/EP2015/075767
(87) Internationale Veröffentlichungsnummer: WO 2016/071427

(56) Entgegenhaltungen:
- EP-A2- 2 667 031
- DE-A1- 4 138 477
- DE-U1- 20 312 986
- US-A1- 2014 030 113

## Beschreibung

Die Erfindung betrifft ein Verfahren zum Betreiben einer Pumpe, insbesondere einer Messkreispumpe für die Kraftstoffverbrauchsmessung in einem Motorprüfstand, wobei in der Pumpleitung ein Strömungswächter mit einem bestimmten Schaltpunkt vorgesehen ist, Weiters betrifft die Erfindung eine Vorrichtung zum Kalibrieren einer in einer Pumpleitung vorgesehenen Pumpe, wobei die Vorrichtung ein Stellglied zur Einstellung der Pumpleistung der Pumpe und eine Regelungseinheit aufweist. Die Erfindung betrifft weiters die Verwendung dieser Vorrichtung zur Ermittlung eines Wartungs- und/oder Austauschzeitpunkts für eine Pumpe.

Die Förderleistung von Pumpen in Abhängigkeit von der Stellgröße, also beispielsweise der von einem Frequenzrichter bereitgestellten Stellfrequenz, nimmt mit zunehmendem Verschleiß ab. Ein beschleunigter Abfall der Förderleistung kann auf ein baldiges Versagen der Pumpe hinweisen.

Dies kann insbesondere bei der Kraftstoffzufuhr von Motorprüfständen zu Problemen führen. Die Durchführung von Testläufen auf Motorprüfständen ist im Allgemeinen mit hohen Kosten verbunden, wobei alleine für die Miete des Prüfstandes für jeden Tag hohe Beträge anfallen können. Einzelne Testläufe können gegebenenfalls über mehrere Wochen laufen, wobei während des Testlaufs im Allgemeinen keine Möglichkeit besteht, bestimmtes Testequipment, wie zum Beispiel die Messkreispumpe für die Kraftstoffversorgung des Motors, zu warten oder auszutauschen. Der Ausfall eines einzigen Bauteils gegen Ende eines Testlaufs kann somit sehr hohe Kosten verursachen, da die Ergebnisse des abgebrochenen Tests meist wertlos sind und wiederholt werden müssen. Es müssen nicht nur die bisher für den Test angefallenen Kosten berücksichtigt werden, sondern auch die verlorene Zeit, die sich auf die Entwicklungsdauer auswirkt. Besonders ärgerlich ist es, wenn die Ursache für den Abbruch eines Testlaufs und die dadurch entstandenen Kosten im Versagen eines verhältnismäßig günstigen Bauteils, wie sie etwa die Messkreispumpe darstellt, liegen.

Die Messkreispumpe wird bei verschiedenen Testläufen sehr unterschiedlich beansprucht, sodass meist nicht genau angegeben werden kann, wie weit der Verschleiß der Pumpe nach einem Testlauf oder mehreren Testläufen bereits fortgeschritten ist. Dies ist jedoch in zweierlei Hinsicht problematisch: Erstens steigt die Ausfallswahrscheinlichkeit der Pumpe ab einer bestimmten Abnutzung stark an, andererseits sinkt auch die Fördermenge der Pumpe mit fortschreitender Abnutzung, und im schlimmsten Fall kann die vom Entwickler bzw. dem Prüfstandfahrer definierte Mindestmenge für den Testlauf unbemerkt unterschritten werden. In beiden Fällen sind die Testergebnisse wertlos, und es stellt sich im Nachhinein heraus, dass die Pumpe schon vor dem Testlauf ersetzt hätte werden müssen.

Um diese Risiken zu vermeiden wird die Messkreispumpe oft schon nach ca. nur 30% der Soll-Lebensdauer ersetzt, da von Außen nicht festgestellt werden kann, wie stark die Pumpe tatsächlich schon abgenutzt ist. Dies stellt zwar eine einigermaßen teure Verschwendung dar, ist aber immer noch günstiger als die Kosten in Kauf zu nehmen, die bei einem Ausfall zu tragen sind.

Um diese Nachteile zu vermeiden, wäre es möglich, eine aufwändige Sensorik in den Kraftstoffzufuhrsystemen vorzusehen, um den tatsächlichen Abnutzungsgrad der Pumpe etwa durch Messung von Druck, Dichte und Fördermenge zu ermitteln. Dies ist jedoch mit erheblichen Kosten verbunden und darüber hinaus kann unter Umständen der Einbau hochwertiger Sensorik die möglichen Probleme noch erhöhen, da neben den gestiegenen Kosten für die Pumpeinheit dann nicht nur die Pumpe, sondern auch die Sensorik regelmäßig gewartet und rechtzeitig ersetzt werden muss. Durch den erheblichen Wartungsbedarf steigen auch die Kosten für den Arbeitsaufwand. Durchflusssensoren können beispielsweise auch einen zusätzlichen Druckaufbau verursachen, der eigens berücksichtigt werden muss.

US 2016/0030113 A1 offenbart ein Kalibrierverfahren zur Ermittlung eines Schaltpunktes einer Pumpe für eine gewünschte Fließrate. In der Pumpleitung ist ein Strömungsmessgerät angeordnet, dessen Messwert als Regelungswert verwendet wird. In einem Kalibrierungsschritt werden Leistungskurven ermittelt, die ein Verhältnis zwischen der Fließrate und dem Druck am Pumpenausgang für unterschiedliche Schaltpunkte repräsentieren.

EP 2667031 A2 offenbart ein Abgasanalysesystem mit zwei Probenpumpen. Durch ein Kalibrierverfahren werden abnormale Fließraten der Probenpumpen ermittelt.

DE 4138477 A1 offenbart ein Verfahren und eine Vorrichtung zur Durchsatzeinstellung einer Pumpe vor und/oder während deren Arbeitseinsatz.

DE 20312986 U1 offenbart einen Strömungswächter zum automatischen Absperren von Fluid durchströmten Leitungen.

Es besteht daher ein Bedarf an Verfahren und Vorrichtungen, die es erlauben, auf einfache Weise, mit geringen Kosten und mit einer hohen Betriebssicherheit den tatsächlichen Abnutzungsgrad von Pumpen zu ermitteln um einerseits die Pumpe vor einem Einsatz so zu kalibrieren, dass die vorgesehene Fördermenge erreicht wird, und um andererseits den Grad der Abnutzung der Pumpe ausreichend genau bestimmen zu können, um die Pumpe rechtzeitig vor einem Versagen austauschen zu können.

Neben dem Grad der Abnutzung und dem Verschleiß (z.B. der Lager, Zahnräder, etc.) der Pumpe, die deren Fördermenge beeinflussen, ist die Fördermenge der üblicherweise verwendeten Pumpen weiters sehr stark abhängig vom Druck und der Viskosität des gepumpten Mediums. Ohne aufwändige Sensorik zum Überwachen der aktuellen Fördermenge kann im schlimmsten Fall die vom Entwickler/Prüfstands-Fahrer definierte Mindestmenge für die Kraftstoffzufuhr unbemerkt unterschritten werden, insbesondere wenn sich einer oder mehrere der drei wesentlichen Einflussfaktoren - Druck und Viskosität des Kraftstoffs und Verschleiß der Pumpe - geändert haben. Die Ergebnisse einer solchen Testreihe wären dann unbrauchbar.

Ein Ziel der Erfindung ist es daher unter anderem, ein Kalibrierungssystem zu ermöglichen, mit dem diese Faktoren ausgeglichen werden können, sodass die Kraftstoffzufuhr bei geänderten Bedingungen zuverlässig und einfach nachgeregelt werden kann, sodass während des Betriebs die tatsächlich für den Motor bereitgestellte Kraftstoffmenge gemäß den Vorgaben stets aufrechterhalten werden kann.

Dieses und weiter Ziele werden durch das eingangs genannte Verfahren erreicht, welches die folgenden Schritte aufweist:
- vorab bei der neuen Pumpe einmalig Ermitteln einer Referenzstellgröße, für ein Stellglied der Pumpe durch
   ∘ Anfahren der Pumpe durch im Wesentlichen stetiges verändern der Stellgröße des Stellglieds bis zum Schaltpunkt; und
   ∘ Ermitteln einer dem Schaltpunkt zugeordneten Stellgröße und Speichern dieser Stellgröße als die Referenzstellgröße;
- vor einem Pumpeneinsatz durchführen eines Kalibrierungsschritts an derselben Pumpe durch:
   ∘ Anfahren der Pumpe durch im Wesentlichen stetiges verändern der Stellgröße des Stellglieds bis zum Schaltpunkt;
   ∘ Ermitteln einer dem Schaltpunkt zugeordneten Stellgröße und Definieren dieser Stellgröße als Kalibrierstellgröße;
   ∘ Ermitteln eines Stellgrößendifferenzwertes zwischen der für die Pumpe und den Strömungswächter gespeicherten Referenzstellgröße und der Kalibrierstellgröße; und
   ∘ Kalibrieren des Stellglieds der Pumpe auf Basis des Stellgrößendifferenzwertes.

Das erfindungsgemäße Verfahren nutzt die Tatsache, dass sich der Schaltpunkt eines einfachen Strömungswächters über die Zeit kaum ändert und er auch nahezu unabhängig vom Druck des gepumpten Mediums ist. Auch sehr einfache und kostengünstige Strömungswächter weisen über den Zeitverlauf eine sehr hohe Schaltpunkttreue auf. Darüber hinaus ist ein Strömungswächter oder Flow Switch sehr kostengünstig zu realisieren und erfordert nur einen sehr geringen Platzbedarf. Auch hat ein Strömungswächter nur geringe Auswirkungen auf das Strömungsverhalten des gepumpten Mediums.

Als Stellgröße kann insbesondere die Frequenz eines Frequenzumrichters der Pumpe angesehen werden, wobei ein Frequenzumrichter als Stellglied für die Pumpe verwendet wird. Die Erfindung kann jedoch auch, in einer einem Fachmann bekannten Weise, mit anderen Stellgliedern verwendet werden.

Als "dem Schaltpunkt zugeordnete Stellgröße" oder "Schaltpunktstellgröße" wird die jeweilige Stellgröße des Stellglieds, also etwa die Frequenz des Frequenzumrichters, bezeichnet, bei der der Strömungswächter beginnt, das Vorhandensein einer Strömung zu detektieren.

Der Ausdruck "im Wesentlichen stetiges Verändern der Stellgröße" bezeichnet eine Veränderung der Stellgröße, die ein ausreichend langsames Ansteigen der Förderleistung, also des Durchflusses, der Pumpe bewirkt, um den Schaltpunkt des Strömungswächters mit der für die Anwendung vorgegebenen Genauigkeit ermitteln zu können. Insbesondere kann auch ein stufenweises Verändern der Stellgröße als "im Wesentlichen stetig" angesehen werden, sofern die Stufen klein genug sind, um den Schaltpunkt ausreichend genau zu bestimmen.

Es ist für die Durchführung des Verfahrens nicht zwingend erforderlich, genau zu wissen, bei welchem Strömungswert der Strömungswächter exakt schaltet, solange der Schaltpunkt eines bestimmten Strömungswächters nur immer konstant bleibt. Es ist daher für die Durchführung des erfindungsgemäßen Verfahrens nicht erforderlich, den Strömungswächter zu kalibrieren.

Üblicher Weise wird die Referenzstellgröße für die neue Pumpe nach dem Einbau der neuen Pumpe ermittelt und diese wird dann über den gesamten Lebenszyklus der Pumpe für die Kalibrierung verwendet. Der Kalibrierungsschritt wird vor jedem neuen Einsatz, z.B. einem neuen Testlauf eines Motorprüfstandes, durchgeführt, wobei die jeweilige Pumpenkennlinie, über die zu fördernde Treibstoffmenge in Abhängigkeit von der Stellgröße geregelt wird, für den Einsatz auf Basis des ermittelten Stellgrößendifferenzwerts nachjustiert werden kann. Sollte der ermittelte Stellgrößendifferenzwert außerhalb eines für den ordnungsgemäßen Betrieb der Pumpe ermittelten Referenzbereichs fallen, kann die Pumpe zeitgerecht vor Beginn des Testlaufs ersetzt werden. Auch eine plötzlich auftretende Änderung des Stellgrößendifferenzwerts im noch zulässigen Bereich kann auf eine Fehlerhafte Pumpe hinweisen.

Während der Schaltpunkt eines Strömungswächters vom Druck des Mediums nur unwesentlich beeinflusst wird, und sich auch über die Zeit kaum ändert, ist er von der Dichte und der Viskosität des Kraftstoffs abhängig. Erfindungsgemäß kann daher in vorteilhafter Weise die Dichte und/oder die Viskosität des gepumpten Mediums über einen Dichte- und/oder Viskositätssensor ermittelt werden, und die Differenz zwischen der Dichte und/oder Viskosität des Mediums bei der Ermittlung der Referenzstellgröße und der Dichte und/oder Viskosität des Mediums beim Kalibrierungsschritt kann bei der Kalibrierung des Stellglieds berücksichtigt werden. Dadurch lässt sich das erfindungsgemäße Verfahren auf der selben Anlage und mit der selben zuvor ermittelten Referenzstellgröße (und einer Referenzdichte) auch zur Kalibrierung von Pumpen verwenden, die zum Pumpen wechselnder Medien mit unterschiedlicher Dichte genutzt werden. Der Zusammenhang zwischen Schaltpunkt eines Strömungswächters und Viskosität des überwachten Fluids ist üblicherweise streng linear und kann einfacher Weise dem Datenblatt des Strömungswächters entnommen werden. Der Schaltpunkt des Strömungswächters kann dabei fix vorgegeben oder einstellbar sein.

In einer weiteren vorteilhaften Ausführungsform kann beim Kalibrierungsschritt auf Basis des Stellgrößendifferenzwertes ein für die Abnutzung der Pumpe kennzeichnender Verschleißwert ermittelt werden. Dies erleichtert die Überwachung des Abnutzungszustandes der Pumpe.

In vorteilhafter Weise kann auf Basis des Verschleißwertes ein Austauschzeitpunkt für die Pumpe ermittelt werden. Der Verschleißwert kann beispielsweise ein Prozentwert der Soll-Lebensdauer der Pumpe sein, wobei aus diesem Wert in Verbindung mit den Planungsdaten eines bestimmten Testlaufs eine Ausfallswahrscheinlichkeit für die Pumpe bei diesem Testlauf ermittelt werden kann. Wenn die Ausfallswahrscheinlichkeit einen vorgegebenen Grenzwert übersteigt, kann die Pumpe vor dem Start des Testlaufs ersetzt werden.

Die Erfindung betrifft weiters eine Vorrichtung der eingangs genannten Art, die in der Kraftstoffleitung einen Strömungswächter aufweist, wobei die Regelungseinheit ausgebildet ist, um die Stellgröße des Stellglieds beim Anfahren der Pumpe bis zum Schaltpunkt des Strömungswächters im Wesentlichen stetig zu verändern und eine dem jeweiligen Schaltpunkt zugeordnete Stellgröße zu ermitteln und zu speichern; einen Stellgrößendifferenzwert zwischen einer für die Pumpe und den Strömungswächter gespeicherten Referenzstellgröße und einer bei der Kalibrierung ermittelten Kalibrierstellgröße zu ermitteln; und um die Stellgröße des Stellglieds der Pumpe auf Basis des Stellgrößendifferenzwertes zu kalibrieren. Mit einer solchen Vorrichtung kann das erfindungsgemäße Verfahren in die Praxis umgesetzt werden.

In einer vorteilhaften Ausführungsform der Erfindung kann der Strömungswächter in die Pumpe integriert sein. Dadurch kann eine äußerst Kompakte Pumpanordnung erzielt werden.

In vorteilhafter Weise kann der Strömungswächter ein binärer Sensor sein. Als binärer Sensor wird im Zusammenhang mit der gegenständlichen Beschreibung ein Sensor angesehen, der zur Messung von genau zwei Zuständen fähig ist, nämlich "Strömung vorhanden" und "keine Strömung detektiert". Trotz der Einfachheit dieses Sensors, die sich auch auf die Kosten vorteilhaft auswirkt, lassen sich die erfindungsgemäßen Vorteile damit erzielen.

Gemäß einer weiteren Ausführungsform kann der Strömungswächter auf der Druckseite der Pumpe vorgesehen sein. Dies ist vorteilhaft, da der vom Strömungswächter verursachte Strömungswiderstand auf der Saugseite abhängig von dem jeweiligen Pumpmedium aufgrund von Unterdruck zu Kavitationen führen kann.

In einer vorteilhaften Ausführungsform kann die Vorrichtung einen Dichtesensor und/oder einen Viskositätssensor für das gepumpte Medium aufweisen. Diese Ausführungsform ist insbesondere für Anlagen vorteilhaft, bei denen unterschiedliche Pumpmedien, zum Beispiel unterschiedliche Treibstoffe, mit unterschiedlicher Dichte bzw. Viskosität gepumpt werden müssen.

Die Erfindungsgemäße Vorrichtung erlaubt eine zuverlässige Kalibrierung der Pumpe, ohne dass die Fördermenge der Pumpe durch eine aufwändige Durchflussmessung eigens ermittelt werden muss. In vorteilhafter Weise kann die Vorrichtung eine Kraftstoffverbrauchs-Messvorrichtung für einen Motorprüfstand sein, wobei die Pumpe eine Kraftstoffpumpe, insbesondere eine in einem Messkreis der Kraftstoffverbrauchs-Messvorrichtung vorgesehene Messkreispumpe sein kann. Bei Testständen kann die dem Motor zugeführte Kraftstoffmenge dadurch jederzeit genau geregelt bzw. überprüft werden. Dies vereinfacht die Bauweise, verringert die Kosten für den Teststand sowie die Wartungskosten, und verringert die Fehleranfälligkeit der Anlage. Ein weiterer Vorteil der erfindungsgemäßen Vorrichtung ist deren geringe Abmessung. Dies ist insbesondere bei Prüfständen relevant, da die maximalen Abmessungen der Messgeräte oft vorgegeben sind. Der Einbau einer aufwändigen Sensorik für die Messkreispumpe wäre aufgrund des reduzierten Platzangebots daher oftmals gar nicht möglich.

Die Erfindung betrifft schließlich die Verwendung einer zuvor beschriebenen erfindungsgemäßen Vorrichtung zur Ermittlung eines Wartungs- und/oder Austauschzeitpunkts für die Pumpe. Dies erlaubt erfindungsgemäß die Ermittlung optimaler Wartungsstrategien, wobei auch komplexe Algorithmen zur Berechnung des Ausfallrisikos und/oder der zu erwartenden Kosten eines Ausfalls in die Wartungsplanung miteinbezogen werden können.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine schematische Darstellung der wesentlichen Elemente der erfindungsgemäßen Vorrichtung;
Fig. 2 eine schematische Darstellung einer erfindungsgemäßen Vorrichtung zur Kraftstoffverbrauchsmessung für einen Motorprüfstand; und
Fig. 3 ein Diagramm mit unterschiedlichen Kennlinien einer Pumpe.

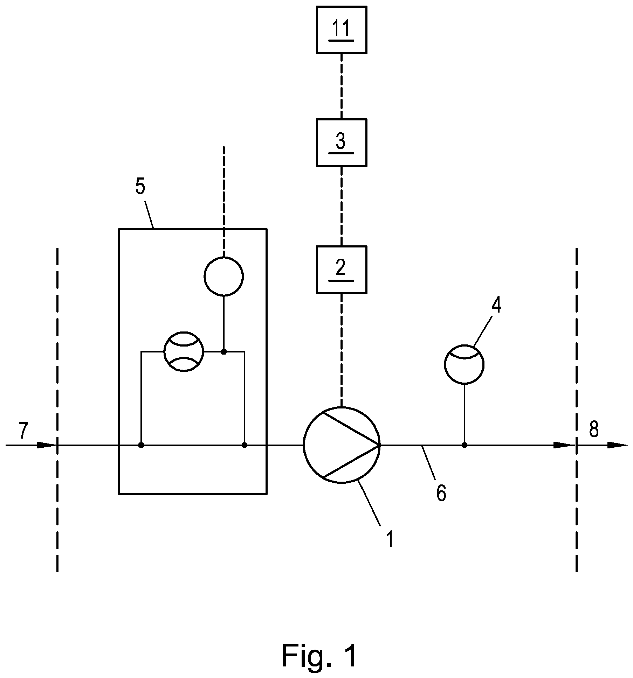

Fig. 1 zeigt eine erfindungsgemäße Vorrichtung in einer vereinfachten schematischen Darstellung, wobei eine Pumpe 1 ein zu pumpendes Medium in einer Pumpleitung 6 von einer Medienquelle 7 zu einer Mediensenke 8 pumpt. Als "Pumpleitung" wird im Zusammenhang mit der gegenständlichen Beschreibung die Leitung bezeichnet, in der die Pumpe angeordnet ist, und durch die die Pumpe das zu pumpende Medium pumpt. Die Pumpleitung kann auch in einem Kreislauf geführt sein, wie dies etwa bei Heizungssystemen üblich ist.

Die Pumpe 1 steht mit einem Stellglied 2 in Verbindung, wobei das Stellglied 2 eine Stellgröße vorgibt, die die Förderleistung der Pumpe 1 bestimmt. Die Stellgröße kann beispielsweise eine Frequenz sein, und das Stellglied 2 kann ein Frequenzumrichter sein.

Der Pumpe vorgelagert ist in der Pumpleitung 6 ein Dichtesensor 5 vorgesehen, wobei anstatt des Dichtesensors 5 oder zusätzlich zu diesem auch einen Viskositätssensor vorgesehen sein kann.

Der Pumpe nachgelagert ist ein Strömungswächter 4 vorgesehen. Der Strömungswächter 4 kann ein herkömmlicher Flow Switch mit einem in der Kraftstoffleitung angeordnetem Paddel sein, wobei das Paddel von der Strömung zur Seite gedrückt wird und dabei einen Schalter auslöst, wenn die Strömung einen gewissen Schwellenwert überschreitet (dies definiert den zuvor angeführten Schaltpunkt des Strömungswächters). Es können auch Strömungswächter verwendet werden, die auf einem anderen Prinzip beruhen, die dargestellte Bauart stellt jedoch eine besonders einfache und auch kostengünstige Lösung dar, die den Vorteil einer sehr hohen Schaltpunkttreue hat (D.h. die Strömungsgeschwindigkeit bzw. der Durchfluss, bei dem der Strömungswächter schaltet, verändert sich über die Lebensdauer kaum).

Eine Regelungseinheit 3 ist mit dem Stellglied 2, dem Strömungswächter 4 und dem Dichtesensor 5 verbunden. Die Regelungseinheit 3 empfängt von dem Dichtesensor 5 (und gegebenenfalls dem Viskositätssensor) für die Dichte (bzw. die Viskosität) kennzeichnende Signale. Weiters empfängt die Regelungseinheit 3 von dem Strömungswächter 4 Signale, die das Vorhandensein oder das nicht Vorhandensein einer Strömung in der Pumpleitung 6 kennzeichnen. Die Regelungseinheit 3 kann die Stellgröße des Stellglieds 2 regeln. Über eine Benutzerschnittstelle 11 können die Parameter der Regelungseinheit 3 von einem Benutzer eingestellt werden. Beispielsweise können über die Benutzerschnittstelle 11 auch Parameter für die Dichte und/oder die Viskosität des zu pumpenden Mediums eingegeben werden, falls kein Dichtesensor 5 oder kein Viskositätssensor in der Anlage vorhanden ist.

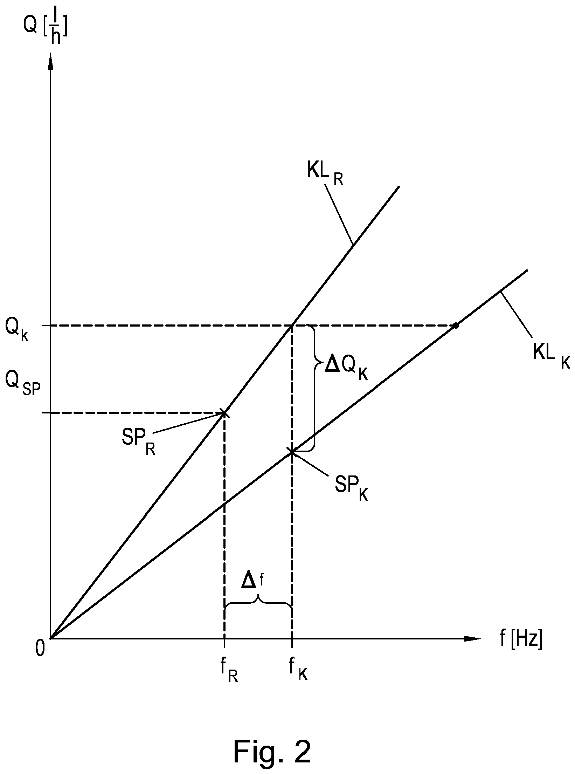

Das erfindungsgemäße Verfahren zum Betreiben einer Pumpe wird nunmehr unter Bezugnahme auf Fig. 2 detaillierter dargelegt. Fig. 2 zeigt ein Diagramm, in dem der Durchfluss Q in Liter pro Stunde (y-Achse) über der Frequenz f des Frequenzumrichters einer Pumpe in Herz (x-Achse) aufgetragen ist.

Zur Ermittlung einer Referenzstellgröße f_{R} wird nach dem Einbau der neuen Pumpe die Frequenz des Frequenzumrichters vom Stillstand der Pumpe aus stetig (oder im Wesentlichen stetig) erhöht und es wird die Frequenz f_{R} ermittelt, ab der der Strömungswächter eine Strömung detektiert, wobei dieser Punkt als Schaltpunkt SP_{R} bezeichnet ist. Der Durchfluss, der diesem Schaltpunkt zugeordnet ist, ist als Q_{SP} bezeichnet. Der Schaltpunkt SP_{R} liegt auf der Kennlinie KL_{R} der neuen Pumpe, wobei die Kennlinie KL_{R} meist aus dem Datenblatt der Pumpe bekannt ist oder vorab ermittelt werden kann. Die Förderleistung der Pumpe wird durch Einstellen der Frequenz festgelegt, die der gewünschten Förderleistung entspricht, wobei die Beziehung zwischen Stellfrequenz und Durchflussmenge durch die Kennlinie KL_{R} definiert ist.

Anhand der bekannten Kennlinie KL_{R} wäre es an sich einfach, den exakten Wert Q_{SP} für den Schaltpunktdurchfluss des Strömungswächters zu ermitteln, eine genaue Kenntnis dieses Wertes ist jedoch für die weiteren Schritte der Kalibrierung nicht erforderlich. Beim vorab einmalig durchgeführten Schritt zur Ermittlung der Referenzfrequenz wird lediglich der Wert der Referenzfrequenz f_{R} gespeichert und in weiterer Folge für die gleiche Kombination aus Pumpe und Strömungswächter verwendet.

Vor jedem neuerlichen Einsatz der Vorrichtung, beispielsweise bei einem Motorprüfstand vor jedem neuen Testlauf, wird die Pumpe mithilfe des gespeicherten Werts für die Referenzfrequenz f_{R} kalibriert. Zum Kalibrieren wird die Pumpe, so wie schon bei der Ermittlung der Referenzfrequenz, durch stetiges (oder zumindest im Wesentlichen stetiges) erhöhen der Frequenz des Frequenzumrichters rampenartig hochgefahren, und es wird die Kalibrierfrequenz f_{K} ermittelt, die im dargestellten Fall höher ist, als die Referenzfrequenz f_{R}. (Der entsprechende Schaltpunkt ist in Fig. 2 mit SP_{K} bezeichnet und er entspricht dem selben Durchfluss Q_{SP}, wie der Referenzschaltpunkt SP_{R}).

Die Frequenzdifferenz Δf zwischen der gespeicherten Referenzfrequenz f_{R} und der bei der Kalibrierung ermittelten Kalibrierfrequenz f_{K} (mit Δf= f_{R} - f_{K}) lässt nun erkennen, dass die aktuelle Kennlinie KL_{K} der Pumpe sich von der Kennlinie KL_{R} der neuen Pumpe unterscheidet. Würde die Pumpe nun mit den ursprünglichen Einstellungen weiter verwendet werden, so ergibt sich eine von der jeweiligen Stellfrequenz abhängige Abweichung ΔQ für den Durchfluss bei dieser Frequenz, der durch eine Kalibrierung vor jedem Testlauf ausgeglichen werden muss. In Fig. 2 ist die Abweichung ΔQ_{K} des Durchflusses bei der Kalibrierfrequenz f_{K} angegeben.

Um das Stellglied, also den Frequenzumrichter der Pumpe, zu kalibrieren, muss die aktuelle Kennlinie KL_{K} durch eine Anpassung der Steuerfrequenzen zur ursprünglichen Kennlinie KL_{R} hin "verschoben" werden. Da sich die Kennlinie in qualitativer Hinsicht nicht unterscheidet (in Fig. 2 sind beide Kennlinien der Einfachheit halber als Geraden durch den Ursprung dargestellt), reicht alleine die Messung der Kalibrierfrequenz f_{K} aus, um die Kennlinie in ihrem gesamten Verlauf zu kalibrieren. Im dargestellten Beispiel lässt sich dies durch die Beziehung Q_{K}/ΔQ_{K} ≙ f_{K}/Δf leicht nachvollziehen.

Die Abweichung der jeweiligen kalibrierten Kennlinie KL_{K} von der Referenzkennlinie KL_{R} kann sich von Testlauf zu Testlauf stark unterscheiden, da sie vom jeweiligen Druck des gepumpten Kraftstoffs und dem Abnutzungsgrad der Pumpe beeinflusst wird, wobei sich der Wert Q_{SP} des Strömungswächters für den Schaltpunktdurchfluss nur unwesentlich verändert. Bei Versuchen hat sich in der Praxis herausgestellt, dass sich auch mit sehr einfachen und kostengünstigen Strömungswächtern eine überraschend genaue Kalibrierung der Pumpe bewerkstelligen lässt.

Obwohl der Schaltpunkt eines Strömungswächters sich über die Zeit kaum verändert, und er auch vom Druck des Mediums nur unwesentlich beeinflusst wird, so ist er doch einigermaßen stark abhängig von der jeweiligen Dichte und der Viskosität des Kraftstoffs. Um dies bei der Kalibrierung zu berücksichtigen kann erfindungsgemäß ein Dichtesensor und/oder eine Viskositätssensor verwendet werden, um die Veränderung des Wertes Q_{SP} für den Schaltpunktdurchfluss bei der Kalibrierung berücksichtigen zu können.

Das erfindungsgemäße Verfahren ist nicht nur auf Pumpen mit linearen Kennlinien anwendbar, sondern kann auch für Pumpen verwendet werden, deren Kennlinien eine andere Form aufweisen. Beispielsweise kann die Kennlinie konvex oder konkav gekrümmt sein und/oder Knickstellen bzw. Unstetigkeitsstellen aufweisen. Die Umsetzung des erfindungsgemäßen Verfahrens für eine andere Kennlinie liegt im Können eines Durchschnittsfachmanns.

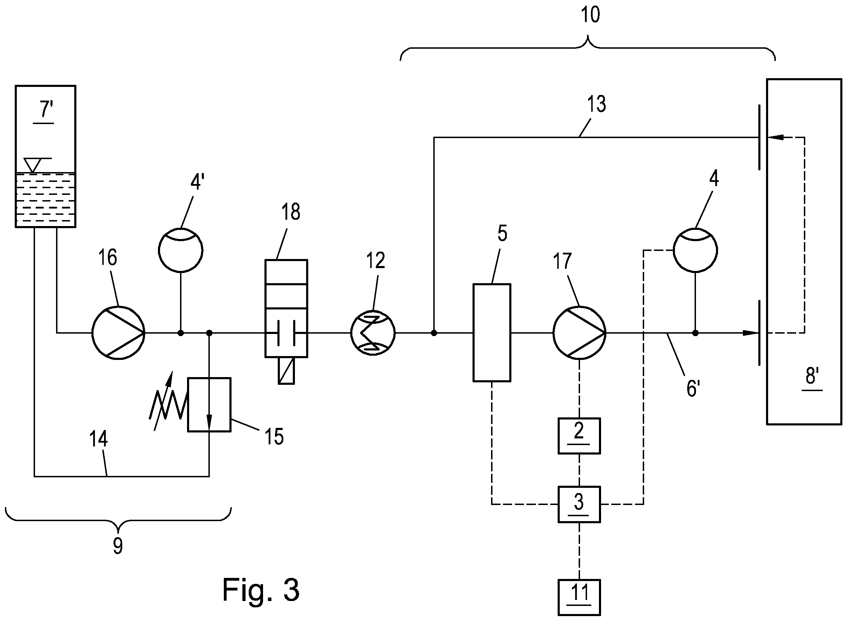

Fig. 3 zeigt die wesentlichen Elemente einer Vorrichtung zur Kraftstoffverbrauchsmessung für einen Motorprüfstand. In einer Kraftstoffleitung 6', die von einem Kraftstofftank 7' zu einem Prüfling 8' (bzw. dem Testmotor) führt, sind eine Vorkreispumpe 16, ein Durchflusssensor 12 (beispielsweise ein Coriolissensor), ein Dichtesensor 5, eine Messkreispumpe 17 und ein Strömungswächter 4 angeordnet. Aufgrund des besseren Ansprechverhaltens ist der Strömungswächter 4 auf der Druckseite der Messkreispumpe 17 angeordnet.

Die in Fig. 3 dargestellte Vorrichtung lässt sich in zwei Kreise einteilen, einen Vorkreis 9 zwischen dem Kraftstofftank 7' und dem in der Kraftstoffleitung 6' vorgesehenen Durchflusssensor 12, und einen Messkreis 10 zwischen dem Durchflusssensor 12 und dem Prüfling 8.

Im Vorkreis 9 zweigt zwischen der Vorkreispumpe 16 und dem Durchflusssensor 12 ein Tankrücklauf 14 ab, der zurück in den Kraftstofftank 7' führt und in dem ein Rücklauf-Druckregler 15 vorgesehen ist. Im Messkreis 10 ist vom Prüfling 8' ausgehend ein Motorrücklauf 13 vorgesehen, der zwischen dem Durchflusssensor 12 und dem Dichtesensor 5 in die Kraftstoffleitung 6' einmündet.

In der dargestellten schematischen Skizze ist der Dichtesensor 5 direkt vor der Messkreispumpe 17 und dem Strömungswächter 4 angeordnet. Der Dichtesensor 5 kann jedoch an einer beliebigen anderen Stelle vorgesehen sein, etwa im Bereich des Tanks 7 oder beim Motor 8. Für einfache Ausführungsformen kann auch ganz auf einen Dichtesensor verzichtet werden, insbesondere wenn keine wesentlichen Änderungen der Dichte des Kraftstoffs zu erwarten sind, oder wenn die Dichte auf andere Weise ermittelt oder über die Benutzerschnittstelle eingegeben werden kann. Zusätzlich oder anstelle des Dichtesensors 5 kann auch ein Viskositätssensor vorgesehen sein.

Die Viskosität und Dichte der üblicherweise verwendeten Kraftstoffe ist im Allgemeinen bekannt oder kann vorab experimentell ermittelt werden. Wenn man die Treibstoffart kennt (z.B.: Diesel oder Benzin) und für alle Fluide den Schaltpunkt experimentell einmal bestimmt, kann man über die Dichte auf das Fluid schließen und den exakten Schaltpunkt ermitteln. Kennt man nur das Fluid mit der minimalen Dichte und das mit der maximalen Dichte, kann aufgrund der linearen Abhängigkeit der dynamischen Viskosität von der Dichte eine sehr gute Abschätzung getroffen werden, wo der Schaltpunkt liegen wird. Es ist zu erwarten, dass diese Abschätzung innerhalb der Messgenauigkeit liegt, zumindest für die in der Automobilindustrie üblichen Flüssigkeiten. Der Fachmann ist in der Lage, die Erfindung an die jeweiligen Kraftstoffeigenschaften und die geforderte Messgenauigkeit anzupassen.

Die Vorkreispumpe 16 pumpt den Kraftstoff aus dem Kraftstofftank 7' und stellt im Bereich zwischen der Vorkreispumpe 16 und der Messkreispumpe 17 einen Versorgungsdruck her, der vom Rücklauf-Druckregler 15 begrenzt wird. Wenn vom Prüfling 8' kein Kraftstoff verbraucht wird und daher auch kein Kraftstoff durch den Durchflusssensor 12 fließt, wird der von der Vorkreispumpe 16 geförderte Kraftstoff über den Tankrücklauf 14 wieder zurück in den Tank 7' gepumpt. Im Messkreis 10 wiederum wird der von der Messkreispumpe 17 gepumpte Kraftstoff dem Prüfling 8' in einem stetigen Strom zugeführt. Kraftstoff, der vom Prüfling 8' nicht verbraucht wird, wird über den Motorrücklauf 13 wieder zur Kraftstoffleitung 6' zurückgeführt.

Der Vorteil dieser beiden Kreislaufsysteme aus Vorkreis 9 und Messkreis 10 liegt darin, dass die Förderleistung von Vorkreispumpe 16 und Messkreispumpe 17 in einem gewissen Toleranzbereich variieren kann, da die tatsächlich vom Prüfling 8' verbrauchte Kraftstoffmenge über den sehr genauen Durchflusssensor 12 sehr exakt ermittelt werden kann, auch wenn die von der Vorkreispumpe 16 und der Messkreispumpt 17 geförderte Menge nicht exakt bekannt ist. Es ist lediglich erforderlich, dass die Vorkreispumpe 16 und Messkreispumpe 17 jeweils die erforderlichen Drucksteigerungen bereitstellen können.

Je nach Art der Prüflings 8' kann es für die Messkreispumpe 17 erforderlich sein, auch sehr hohe Drücke liefern zu müssen, wobei aufgrund dieser Belastung Defekte im Allgemeinen bei der Messkreispumpe 17 und nicht bei der Vorkreispumpe 16 auftreten. Auch wenn Schwankungen der Fördermenge der Vorkreispumpe 16 oder der Messkreispumpe 17 in einem gewissen Ausmaß unproblematisch sind, kann ein allzu großer Abfall der Fördermenge dazu führen, dass der Prüfling 8' nicht die erforderliche Menge an Kraftstoff beziehen kann, bzw. dass der Druck des dem Prüfling 8' bereitgestellten Kraftstoffs zu niedrig ist. In diesem Fall wären die Ergebnisse eines Testlaufs unbrauchbar.

Vom Anmelder durchgeführte Tests haben ergeben, dass die Pumpleistung der Messkreispumpe 17 - abhängig vom geförderten Medium - bereits nach einem Drittel der Soll-Lebensdauer der Pumpe um 200 l/h vom eigentlich eingestellten Wert (von beispielsweise 800 l/h) abweichen kann. Dies entspricht einer Abweichung von 25 %. Mithilfe der erfindungsgemäßen Vorrichtung kann diese Abweichung mit einem sehr geringen Aufwand auf einen Wert von unter 10% über die gesamte Lebensdauer begrenzt werden. Zusätzlich ermöglicht jeder Kalibrierungsschritt eine zuverlässige Beurteilung der Tatsächlichen Abnutzung der Pumpe.

Das erfindungsgemäße Verfahren wird von der Vorrichtung gemäß Fig. 3 analog zur oben beschriebenen Vorgehensweise durchgeführt, wobei beim rampenartigen Hochfahren der Förderleistung der Messkreispumpe 17 der Kraftstoff in dem Messkreis 10 in einem Kreislauf gepumpt wird.

Um die Pumpleistung der Messkreispumpe 17 exakt zu ermitteln, wäre es zwar auch möglich, einen zweiten Durchflusssensor im Bereich des Messkreises, also beispielsweise hinter der Messkreispumpe 17 einzubauen, die dazu allgemein verwendeten Coriolissensoren sind jedoch sehr teuer und haben den Nachteil, dass sie den Druck des Kraftstoffs, der dem Prüfling 8' zugeführt wird, beeinflussen. In der Praxis ist ein zweiter Durchflussmesser daher keine sinnvolle Option.

Um das erfindungsgemäße Verfahren auch für die Vorkreispumpe 16 vorteilhaft anwenden zu können, weist der Vorkreis 9 in der dargestellten Ausführungsform einen eigenen Strömungswächter 4' auf, wobei der Vorkreis 9 mittels eines Sperrventils 18 vom Messkreis 10 getrennt werden kann, sodass der gesamte Kraftstoff im Vorkreis 9 über den Rücklauf-Druckregler 15 und den Tankrücklauf 14 in einem Kreislauf zurück in den Tank gepumpt wird. Die Kalibrierung kann dann analog zum oben beschriebenen Verfahren auch für die Vorkreispumpe 9 durchgeführt werden (die Steuereinheiten, also insbesondere ein Stellglied und eine Regelungseinheit, über die die Vorkreispumpe geregelt wird, sind der Übersichtlichkeit halber nicht dargestellt, es ist einem Fachmann jedoch bekannt, wie solch eine Regelung praktisch umzusetzen ist).

Als Pumpen können im Zusammenhang mit der gegenständlichen Erfindung beliebige Pumpen verwendet werden, deren Pumpleistung mit dem verwendeten Stellglied für die jeweilige Anwendung ausreichend genau geregelt werden kann. Zu Beispielen solcher Pumpen zählen Zahnradpumpen, Drehschieberpumpen, Drehkolbenpumpe, Kreiskolbenpumpe, oder ähnliche. Im Grunde kann das erfindungsgemäße Verfahren auf jede Pumpe vorteilhaft angewendet werden, bei der die Fördermenge variabel eingestellt werden kann. Es ist vorteilhaft, wenn die Pumpe einen linearen Fördermengen-Drehzahl-Kennlinienverlauf besitzt. Dies ist jedoch keine zwingende Voraussetzung.

Die Erfindung ist nicht nur für eine Verwendung im Zusammenhang mit Kraftstoffmessungen von Motortestständen verwendbar, sondern kann auch für andere Arten von Pumpen verwendet werden. Beispielsweise könnte die Erfindung auch zur Überwachung und Nachstellung der Förderleistung von Pumpen in Heizungskreisläufen vorteilhaft verwendet werden.

### Bezugszeichen:

Pumpe 1
Stellglied 2 - Frequenzumrichter 2'
Regelungseinheit 3
Strömungswächter 4, 4'
Dichtesensor 5
Pumpleitung 6 - Kraftstoffleitung 6'
Medienquelle 7 - Kraftstofftank 7'
Mediensenke 8 - Prüfling 8'
Vorkreis 9
Messkreis 10
Benutzerschnittstelle 11
Durchflusssensor 12
Motorrücklauf 13
Tankrücklauf 14
Rücklauf-Druckregler 15
Vorkreispumpe 16
Messkreispumpe 17
Sperrventil 18

## Patentansprüche

1. Verfahren zum Betreiben einer Pumpe, insbesondere einer Messkreispumpe für die Kraftstoffverbrauchsmessung in einem Motorprüfstand, wobei in der Pumpleitung ein Strömungswächter mit einem bestimmten Schaltpunkt (SP) vorgesehen ist, und wobei das Verfahren durch die folgenden Schritte gekennzeichnet ist:
- vorab bei der neuen Pumpe einmalig Ermitteln einer Referenzstellgröße (f_{R}), für ein Stellglied der Pumpe durch
∘ Anfahren der Pumpe durch im Wesentlichen stetiges verändern der Stellgröße des Stellglieds bis zum Schaltpunkt (SP); und
∘ Ermitteln einer dem Schaltpunkt (SP) zugeordneten Stellgröße und Speichern dieser Stellgröße als die Referenzstellgröße (f_{R});
- vor einem Pumpeneinsatz durchführen eines Kalibrierungsschritts an derselben Pumpe durch:
∘ Anfahren der Pumpe durch im Wesentlichen stetiges verändern der Stellgröße des Stellglieds bis zum Schaltpunkt (SP);
∘ Ermitteln einer dem Schaltpunkt (SP) zugeordneten Stellgröße und Definieren dieser Stellgröße als Kalibrierstellgröße (f_{K});
∘ Ermitteln eines Stellgrößendifferenzwertes (Δf) zwischen der für die Pumpe und den Strömungswächter gespeicherten Referenzstellgröße (f_{R}) und der Kalibrierstellgröße (f_{K}); und
∘ Kalibrieren des Stellglieds der Pumpe auf Basis des Stellgrößendifferenzwertes (Δf).

2. Verfahren nach Anspruch 1, **dadurch gekennzeichnet, dass** die Dichte und/oder die Viskosität des gepumpten Mediums über einen Dichte- und/oder Viskositätssensor ermittelt wird, und dass die Differenz zwischen der Dichte und/oder Viskosität des Mediums bei der Ermittlung der Referenzstellgröße und der Dichte und/oder Viskosität des Mediums beim Kalibrierungsschritt bei der Kalibrierung des Stellglieds berücksichtigt wird.

3. Verfahren nach einem der Ansprüche 1 oder 2, **dadurch gekennzeichnet, dass** beim Kalibrierungsschritt auf Basis des Stellgrößendifferenzwertes (Δf) ein für die Abnutzung der Pumpe kennzeichnender Verschleißwert ermittelt wird.

4. Verfahren nach Anspruch 3, **dadurch gekennzeichnet, dass** auf Basis des Verschleißwertes ein Austauschzeitpunkt für die Pumpe ermittelt wird.

5. Vorrichtung zum Kalibrieren einer in einer Pumpleitung (6) vorgesehenen Pumpe (1), wobei die Vorrichtung ein Stellglied (2) zur Einstellung der Pumpleistung der Pumpe (1) und eine Regelungseinheit (3) aufweist, **dadurch gekennzeichnet, dass** die Vorrichtung in der Kraftstoffleitung (6) einen Strömungswächter (4) aufweist, wobei die Regelungseinheit (3) ausgebildet ist, um
- die Stellgröße des Stellglieds (2) beim Anfahren der Pumpe (1) bis zum Schaltpunkt (SP) des Strömungswächters (4) im Wesentlichen stetig zu verändern und eine dem jeweiligen Schaltpunkt (SP) zugeordnete Stellgröße zu ermitteln und zu speichern;
- einen Stellgrößendifferenzwert (Δf) zwischen einer für die Pumpe (1) und den Strömungswächter (4) gespeicherten Referenzstellgröße (f_{R}) und einer bei der Kalibrierung ermittelten Kalibrierstellgröße (f_{K}) zu ermitteln; und
- um die Stellgröße des Stellglieds (2) der Pumpe (1) auf Basis des Stellgrößendifferenzwertes (Δf) zu kalibrieren.

6. Vorrichtung nach Anspruch 5 **dadurch gekennzeichnet, dass** der Strömungswächter (4) in die Pumpe (1) integriert ist.

7. Vorrichtung nach Anspruch 5 oder 6, **dadurch gekennzeichnet, dass** der Strömungswächter (4) ein binärer Sensor ist.

8. Vorrichtung nach einem der Ansprüche 5 bis 7, **dadurch gekennzeichnet, dass** der Strömungswächter (4) auf der Druckseite der Pumpe (1) vorgesehen ist.

9. Vorrichtung nach einem der Ansprüche 5 bis 8, **dadurch gekennzeichnet, dass** die Vorrichtung einen Dichtesensor (5) und/oder einen Viskositätssensor für das gepumpte Medium aufweist.

10. Vorrichtung nach einem der Ansprüche 5 bis 9, **dadurch gekennzeichnet, dass** die Vorrichtung eine Kraftstoffverbrauchs-Messvorrichtung für einen Motorprüfstand ist, wobei die Pumpe (1) eine Kraftstoffpumpe, insbesondere eine in einem Messkreis der Kraftstoffverbrauchs-Messvorrichtung vorgesehene Messkreispumpe (17) ist.

11. Verwendung einer Vorrichtung nach einem der Ansprüche 5 bis 10 zur Ermittlung eines Wartungs- und/oder Austauschzeitpunkts für eine Pumpe.

## Claims

1. A method for operating a pump, and in particular a measurement circuit pump for measuring fuel consumption on an engine test stand, wherein a flow monitor having a certain switch point (SP) is provided in the pump line, the method being **characterized by** the following steps:
- in advance, when the pump is new, ascertaining once a reference controlled variable (f_{R}) for an actuator of the pump by
∘ starting the pump by substantially steadily varying the controlled variable of the actuator up to the switch point (SP); and
∘ ascertaining a controlled variable associated with the switch point (SP), and storing this controlled variable as the reference controlled variable (f_{R});
- prior to use of the pump, carrying out a calibration step on the same pump by:
∘ starting the pump by substantially steadily varying the controlled variable of the actuator up to the switch point (SP);
∘ ascertaining a controlled variable associated with the switch point (SP), and defining this controlled variable as the calibration controlled variable (f_{K});
∘ ascertaining a controlled variable difference value (Δf) between the reference controlled variable (f_{R}) stored for the pump and the flow monitor and the calibration controlled variable (f_{K}); and
∘ calibrating the actuator of the pump based on the controlled variable difference value (Δf).

2. The method according to claim 1, **characterized in that** the density and/or the viscosity of the pumped medium are ascertained via a density and/or viscosity sensor, and the difference between the density and/or viscosity of the medium during the ascertainment of the reference controlled variable and the density and/or viscosity of the medium during the calibration step is taken into consideration in the calibration of the actuator.

3. The method according to claim 1 or 2, **characterized in that** a wear value identifying the wear of the pump is ascertained during the calibration step based on the controlled variable difference value (Δf).

4. The method according to claim 3, **characterized in that** a replacement point in time is ascertained for the pump based on the wear value.

5. A device for calibrating a pump (1) provided in a pump line (6), the device comprising an actuator (2) for setting the pumping capacity of the pump (1) and a control unit (3), **characterized in that** the device comprises a flow monitor (4) in the fuel line (6), the control unit (3) being designed to
- substantially steadily vary the controlled variable of the actuator (2), when starting the pump (1), up to the switch point (SP) of the flow monitor (4), and to ascertain and store a controlled variable associated with the respective switch point (SP);
- ascertain a controlled variable difference value (Δf) between the reference controlled variable (f_{R}) stored for the pump (1) and the flow monitor (4) and a calibration controlled variable (f_{K}) ascertained during the calibration; and
- calibrate the controlled variable of the actuator (2) of the pump (1) based on the controlled variable difference value (Δf).

6. The device according to claim 5, **characterized in that** the flow monitor (4) is integrated in the pump (1).

7. The device according to claim 5 or 6, **characterized in that** the flow monitor (4) is a binary sensor.

8. The device according to any one of claims 5 to 7, **characterized in that** the flow monitor (4) is provided on the pressure side of the pump (1).

9. The device according to any one of claims 5 to 8, **characterized in that** the device comprises a density sensor (5) and/or a viscosity sensor for the pumped medium.

10. The device according to any one of claims 5 to 9, **characterized in that** the device is a fuel consumption measuring device for an engine test stand, wherein the pump (1) is a fuel pump, and in particular a measurement circuit pump (17) provided in a measurement circuit of the fuel consumption measuring device.

11. Use of a device according to any one of claims 5 to 10 for ascertaining a maintenance and/or replacement point in time for a pump.

## Revendications

1. Procédure d'exploitation d'une pompe, en particulier d'une pompe de circuit de mesure pour évaluer la consommation de carburant dans un banc dynamométrique, où un contrôleur de débit avec un certain point de commutation (PC) est prévu dans la conduite de pompage et où la procédure est marquée par les étapes suivantes :
- au préalable, déterminer la valeur de réglage de référence sur une nouvelle pompe (f_{R}), pour un actionneur de la pompe via
∘ un démarrage de la pompe essentiellement via un changement constant de la valeur de réglage de l'actionneur jusqu'au point de commutation (PC) ; et
∘ déterminer une valeur de réglage attribuée au point de commutation (PC) et enregistrer cette valeur de réglage en tant que valeur de réglage de référence (f_{R}) ;
- avant d'utiliser la pompe, réalisation d'une étape de calibration sur la pompe en question en :
∘ effectuant un démarrage de la pompe essentiellement via un changement constant de la valeur de réglage de l'actionneur jusqu'au point de commutation (PC) ;
∘ déterminant une valeur de réglage attribuée au point de commutation (PC) et définissant cette valeur de réglage en tant que valeur de calibration (f_{K}) ;
∘ déterminant une valeur de différence de valeur de réglage (Δf) entre la valeur de réglage de référence (f_{R}) et la valeur de réglage de calibration (f_{K}) enregistrées pour la pompe et le contrôleur de débit ; et
∘ calibrant de l'actionneur de la pompe sur la base de la valeur de différence de la valeur de réglage (Δf).

2. Procédure selon l'exigence 1, **caractérisée par le fait que** la densité et/ou la viscosité du milieu pompé sont déterminées par un capteur de densité et/ou de viscosité et que la différence entre la densité et/ou la viscosité du milieu est prise en compte lors de la détermination de la valeur de réglage de référence et la densité et/ou la viscosité du milieu sont prises en compte lors de l'étape de calibration de l'actionneur.

3. Procédure selon une des exigences 1 ou 2, **caractérisée par le fait que** lors de l'étape de calibration, sur la base de la valeur de différence de la valeur de réglage (Δf) une valeur d'usure sera déterminée pour l'état de la pompe.

4. Procédure selon l'exigence 3, **caractérisée par le fait que** sur la base de la valeur d'usure, une date de substitution est déterminée pour la pompe.

5. Dispositif pour le calibrage d'une pompe (1) prévue dans une conduite de pompe (6), où le dispositif présente un actionneur (2) pour le réglage de la puissance de pompage de la pompe (1) et une unité de régulation (3), **caractérisée par le fait que** le dispositif dans la conduite de carburant (6) présente un contrôleur de débit (4), où l'unité de régulation (3) est formée, pour
- essentiellement changer perpétuellement la valeur de réglage de l'actionneur (2) lors du démarrage de la pompe (1) jusqu'au point de commutation (PC) du contrôleur de débit (4) et déterminer et enregistrer la valeur de réglage correspondante du point de commutation (PC) ;
- déterminer une valeur de différence de valeur de réglage (Δf) entre une valeur de réglage de référence (f_{R}) et une valeur de réglage de calibration (f_{K}) enregistrées pour la pompe (1) et le contrôleur de débit (4) ; et
- calibrer la valeur de réglage de l'actionneur (2) de la pompe (1) sur la base de la valeur de différence de la valeur de réglage (Δf).

6. Dispositif selon l'exigence 5, **caractérisée par le fait que** le contrôleur de débit (4) est intégré à la pompe (1).

7. Dispositif selon l'exigence 5 ou 6, **caractérisée par le fait que** le contrôleur de débit (4) est un capteur binaire.

8. Dispositif selon une des exigences 5 à 7, **caractérisé par le fait que** le contrôleur de débit (4) est prévu sur le côté de refoulement de la pompe (1).

9. Dispositif selon une des exigences 5 à 8, **caractérisé par le fait que** le dispositif présente un capteur de densité (5) et/ou un capteur de viscosité pour le milieu pompé.

10. Dispositif selon une des exigences 5 à 9, **caractérisé par le fait que** le dispositif est un dispositif de mesure de la puissance consommée pour un banc dynamométrique, où la pompe (1) est une pompe à carburant, en particulier une pompe de circuit de mesure (17) prévue dans un circuit de mesure du dispositif de mesure de la puissance consommée.

11. Utilisation d'un dispositif selon une des exigences 5 à 10 pour déterminer une date de maintenance et/ou de substitution pour une pompe.
